# EUROPEAN PATENT APPLICATION

(11) **EP 2 866 508 A1**
(43) Date of publication of application: **29.04.2015**
(21) Application number: 13807187.3
(22) Date of filing: 15.05.2013
(51) Int. Cl.: H04W 72/04

(54) **TDD UPLINK AND DOWNLINK CONFIGURATION UPDATING METHOD AND APPARATUS AND TDD RE-CONFIGURATION INFORMATION NOTIFICATION METHOD AND APPARATUS**

(30) Priority: 20.06.2012 CN 201210204700
(71) Applicant: ZTE Corporation, Shenzhen, Guangdong 518057 (CN)
(72) Inventor: YAO, Jun, Shenzhen Guangdong 518057 (CN); HUANG, Yada, Shenzhen Guangdong 518057 (CN); ZHANG, Wenfeng, Shenzhen Guangdong 518057 (CN)
(74) Representative: D'Halleweyn, Nele Veerle Trees Gertrudis
(86) International application number: PCT/CN2013/075631
(87) International publication number: WO 2013/189220

(57) **Abstract**

Provided are a method and apparatus for updating time division duplex (TDD) uplink and downlink configuration and a method and apparatus for notifying TDD reconfiguration information. The method for updating TDD uplink and downlink configuration includes: after receiving TDD reconfiguration information sent by a network side, a user equipment (UE) immediately determining a time period of using a TDD uplink and downlink configuration indicated in the received TDD reconfiguration information (S202), and using the TDD uplink and downlink configuration indicated by the received TDD reconfiguration information in the time period; or, after receiving the TDD reconfiguration information sent by the network side, the UE immediately using the TDD uplink and downlink configuration indicated in the received TDD reconfiguration information (S204). By means of the present invention, the problem of service delay and/or resource waste due to a mismatching between the TDD uplink and downlink configuration and current uplink and downlink services can be avoided.

## Description

### Technical Field

The present invention relates to the field of communications, and more particularly, to a method and apparatus for updating time division duplex (TDD) uplink and downlink configuration and a method and apparatus for notifying TDD reconfiguration information.

### Background of the Invention

At present, all of the long term evolution (LTE) technology, the Worldwide Interoperability for Microwave Access (Wimax), and the Ultra Mobile Broadband (UMB) systems have two duplex modes: Frequency Division Duplex (FDD) mode and time division duplex (TDD) mode. In the FDD mode, the uplink and downlink use different frequency bands for simultaneous data transmission, and in the TDD mode, the uplink and downlink use the same frequency band to share the time for data transmission.

In a wireless system in which the radio frame is taken as the unit to perform data transmission, the uplink and downlink of the radio air interface transmission generally transmit data in the unit of radio frame, wherein each radio frame consists of a number of subframes. For the LTE system, the subframes use the orthogonal frequency division multiplexing (OFDM) symbol as the basic unit, and each radio frame consists of 10 subframes.

The resource allocation of uplink/downlink subframes in the FDD system is relatively independent, that is, the resource allocations of the downlink subframes and the uplink subframes can be performed individually. In the TDD system, a number of subframes in a radio frame can be allocated as uplink subframes and downlink subframes according to a certain ratio based on the service needs. Under normal circumstances, the ratio of the number of uplink subframes to the number of downlink subframes in the TDD system can be varied in order to meet the needs of different service types. Depending on the needs of service types in different areas, selecting an appropriate configuration of uplink to downlink subframe ratio will help improve the spectral efficiency of the TDD system. For example, for an area with a relatively large number of downloading data services, a configuration with a relatively large number of downlink subframes should be selected; for an area with a relatively large number of uploading services, a configuration with a relatively large number of uplink subframes should be selected; for an area with relatively balanced uploading and downloading services, a configuration with about the same proportions of the number of uplink subframes and that of downlink subframes should be selected.

In the current LTE TDD (referred to as TD-LTE) system, there are seven kinds of modes set for the uplink and downlink configuration of the TDD system, and each mode can be called a TDD uplink and downlink configuration identifier, as shown in the first column of Table 1. In Table 1, one radio frame comprises 10 subframes whose subframe numbers are respectively labeled as: 0, 1, 2, 3, 4, 5, 6, 7, 8 and 9, wherein, "D" denotes that the subframe is a downlink subframe; "U" denotes that the subframe is an uplink subframe; "S" denotes that the subframe is a special subframe, that is, the subframe comprises a downlink transmission portion, a guard interval, and an uplink transmission portion. For example, when the TDD uplink and downlink configuration identifier is 1, that is, it is the TDD uplink and downlink configuration 1: the #0, #4, #5 and #9 subframes in one radio frame are downlink subframes; the #1 and #6 subframes are specific subframes; the #2, #3, #7 and #8 subframes are uplink subframes.

**Table 1: Existing uplink and downlink configuration list in the TD-LTE system**

| TDD uplink and downlink configuration | Subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

From Table 1 it can be seen that, the percentage of the downlink transmission in all the transmission time is from 40% to 90%, this kind of configuration of the uplink to downlink subframe ratio is mainly taking into account that typically there are more downlink data services than uplink data services in the current multimedia services.

In the current LTE technology, the network side broadcasts the TDD uplink and downlink configuration in the local cell through the system information block type 1 (SIB1) message. Wherein, the transmission period cycle of the SIB1 is 80ms, and moreover, in order to ensure a correct reception of the users at the edges of the cell, the same transmission will be repeated 3 times within one transmission period cycle.

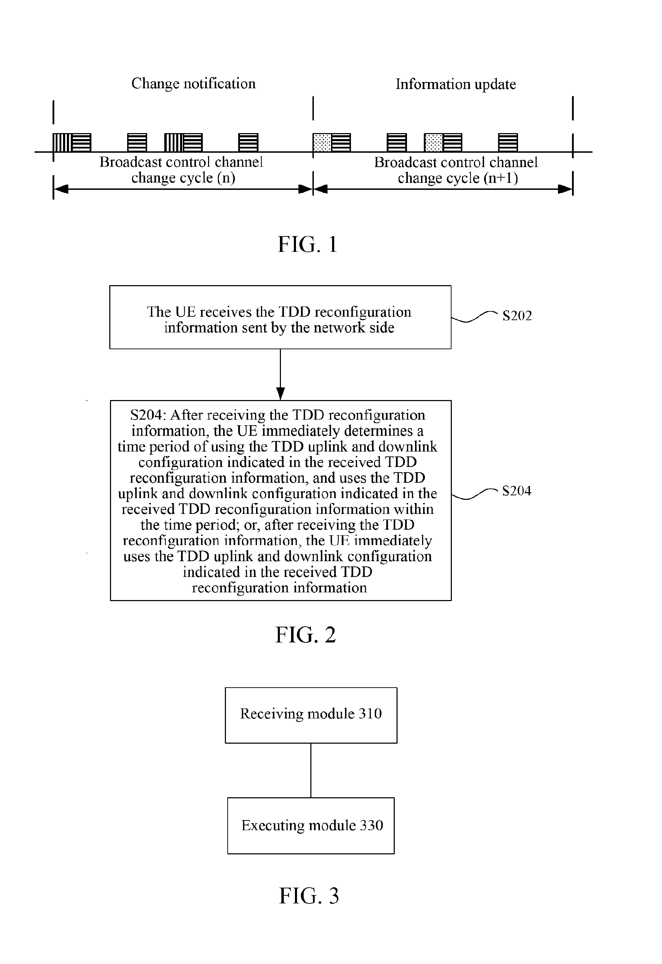

In the related art, the network side can only change the system information in particular radio frames. FIG. 1 is a schematic diagram of a system information change in the existing TD-LTE system, and in the n^{th} broadcast control channel (BCCH) change cycle, that is, in the BCCH change cycle (n), if the system information indicated by the shadow type which is the vertical stripes will change in the (n+1)^{th} BCCH change cycle and will change to the system information indicated by the shadow type which is a dotted pattern, the network side needs to notify the user equipment (UE) during the BCCH change cycle (n) that a certain system information will change in the next BCCH change cycle, and indicate the UE to prepare to receive the updated system information at the start of the next BCCH change cycle. Therefore, when the network side needs to change the system information, it can only change at the boundary of the BCCH change cycle and requires using a paging message to notify the UE that the system message will change in the next BCCH change cycle in advance. However, during this period, because the uplink and downlink configuration does not change timely, it could cause the actual uplink to downlink service ratio does not match with the TDD uplink to downlink subframe ratio currently in use. For example, currently the cell uses the TDD uplink and downlink configuration 4, the uplink to downlink subframe ratio is 1:4, if the uplink service in the cell increases within a certain period of time, it may result in that the uplink service delays due to the insufficient uplink resources, and also lead to that some of the downlink resources are in the idle state, resulting in a waste of downlink resources.

### Summary of the Invention

Aiming to the problem in the related art that the TDD uplink and downlink configuration used in one cell cannot be flexibly adjusted, the embodiment of the present invention provides a method and apparatus for updating TDD uplink and downlink configuration and a method and apparatus for notifying TDD reconfiguration information, in order to at least solve the abovementioned problem.

The embodiment of the present invention provides a method for updating time division duplex (TDD) uplink and downlink configuration, comprising:
after receiving TDD reconfiguration information sent by a network side, a user equipment (UE) immediately determining a time period of using a TDD uplink and downlink configuration indicated in the received TDD reconfiguration information, and using the TDD uplink and downlink configuration indicated by the received TDD reconfiguration information in the time period; or,
after receiving the TDD reconfiguration information sent by the network side, the UE immediately using the TDD uplink and downlink configuration indicated in the received TDD reconfiguration information.

Alternatively, the step of the UE immediately determining a time period of using the TDD uplink and downlink configuration indicated in the received TDD reconfiguration information comprises: the UE determining to use the TDD uplink and downlink configuration indicated in the received TDD reconfiguration information in one of the following time periods:
in a next broadcast control channel (BCCH) change cycle,
in a time period indicated in the TDD reconfiguration information,
from the time point indicated in the TDD reconfiguration information to the time point indicated in the newly received TDD reconfiguration information, and
from the starting time point of the next BCCH change cycle to the ending time point of the BCCH change cycle where the newly received TDD reconfiguration information is located.

Alternatively, the step of the UE receiving the TDD reconfiguration information sent by the network side comprises: the UE receiving the TDD reconfiguration information carried in one of the following messages and sent by the network side:
System Information Block type 1 (SIB1) message,
SIB message defined for the TDD Reconfiguration information,
Radio Resource Control (RRC) reconfiguration message, and
RRC message defined for the TDD reconfiguration information.

Alternatively, when the TDD reconfiguration information is carried in the SIB message defined for the TDD reconfiguration information, the method further comprises:
when the TDD reconfiguration information change leads to a system information (SI) change, the network side does not change the value of a system information value tag in the SIB1 message.

Alternatively, when the TDD reconfiguration information is carried in the SIB message defined for the TDD reconfiguration information, the step of the UE receiving the TDD reconfiguration information sent by the network side comprises:
the UE receiving a paging message, wherein, the paging message comprises an indication of a change in the defined SIB message;
the UE immediately receiving the SIB message carrying the TDD reconfiguration information and sent by the network side according to a mapping relationship between the SI message and the SIB1 message which carries the TDD reconfiguration information and is indicated in the SIB message; and
the UE reading the TDD reconfiguration information in the SIB message carrying the TDD reconfiguration information.

Alternatively, the TDD reconfiguration information comprises one of the following contents: TDD uplink and downlink configuration identifier or uplink and downlink configurations of all subframes in one radio frame.

Alternatively, the TDD reconfiguration information further comprises one of the following contents:
using a start radio frame number of the TDD uplink and downlink configuration indicated in the TDD reconfiguration information;
using the start radio frame number and an end radio frame number of the TDD uplink and downlink configuration indicated in the TDD reconfiguration information;
using the start radio frame number and a subframe number of the TDD uplink and downlink configuration indicated in the TDD reconfiguration information;
using the start radio frame number, the end radio frame number, a start subframe number, and an end subframe number of the TDD uplink and downlink configuration indicated in the TDD reconfiguration information;
a life cycle of the TDD uplink and downlink configuration indicated in the TDD reconfiguration information; and
a life cycle and an offset of the TDD uplink and downlink configuration indicated in the TDD reconfiguration information.

Alternatively, before the step of the UE receiving the TDD reconfiguration information sent by the network side, the method further comprises:
the UE reporting a TDD reconfiguration function supported by the UE at the same time of reporting the UE capability to the network side.

Alternatively, before the step of the UE receiving the TDD reconfiguration information sent by the network side, the method further comprises:
the network side sending an ON information to the UE to control the UE turn on the TDD reconfiguration function.

Alternatively, after the step of the UE receiving the TDD reconfiguration information sent by the network side, the method further comprises:
the network side sending an OFF information to the UE to control the UE turn off the TDD reconfiguration function.

The embodiment of the present invention further provides an apparatus for updating time division duplex (TDD) uplink and downlink configuration which is located in a user equipment, comprising:
a receiving module, which is configured to receive TDD reconfiguration information sent by a network side;
an executing module, which is configured to: after the receiving module receives the TDD reconfiguration information, immediately determine a time period of using the TDD uplink and downlink configuration indicated in the received TDD reconfiguration information, and use the TDD uplink and downlink configuration indicated in the received TDD reconfiguration information in the time period; or, after the receiving module receives the TDD reconfiguration information, immediate use the TDD uplink and downlink configuration indicated in the received TDD reconfiguration information.

Alternatively, the executing module determines to use the TDD uplink and downlink configuration indicated in the received TDD reconfiguration information in one of the following time periods:
in a next broadcast control channel (BCCH) change cycle,
in a time period indicated in the TDD reconfiguration information,
from the time point indicated in the TDD reconfiguration information to the time point indicated in the newly received TDD reconfiguration information, and
from the starting time point of the next BCCH change cycle to the ending time point of the BCCH change cycle where the newly received TDD reconfiguration information is located.

Alternatively, the receiving module is configured to receive the TDD reconfiguration information carried in one of the following messages and sent by the network side:
System Information Block type 1 (SIB1) message,
SIB message defined for the TDD Reconfiguration information,
Radio Resource Control (RRC) reconfiguration message, and
RRC message defined for the TDD reconfiguration information.

Alternatively, when the TDD reconfiguration information is carried in the SIB message defined for the TDD reconfiguration information, the receiving module comprises:
a first receiving unit, which is configured to: receive a paging message, wherein the paging message comprises an indication of a change of the defined SIB message;
a second receiving unit, which is configured to: receive a SIB message carrying the TDD reconfiguration information according to a mapping relationship between a system information (SI) message and the SIB message carrying the TDD reconfiguration information indicated in the SIB1 message; as well as
a reading unit, which is configured to: read the TDD reconfiguration information in the SIB message carrying the TDD reconfiguration information.

The embodiment of the present invention further provides a method for notifying time division duplex (TDD) reconfiguration information, comprising:
the network side determining that the current TDD uplink and downlink configuration needs to be changed;
the network side determining the TDD uplink and downlink configuration after the change; and
the network side sending the TDD reconfiguration information to a user equipment (UE) with the TDD reconfiguration function in the local cell, wherein the TDD reconfiguration information indicates the TDD uplink and downlink configuration after the change.

Alternatively, the step of the network side sending the TDD reconfiguration information to the UE with the TDD reconfiguration function in the local cell comprises: the network side carrying the TDD reconfiguration information in one of the following messages and sending it to the UE in the local cell:
System Information Block type 1 (SIB1) message,
SIB message defined for the TDD Reconfiguration information,
Radio Resource Control (RRC) reconfiguration message,
RRC message defined for the TDD reconfiguration information.

Alternatively, when the TDD reconfiguration information is carried in the SIB message defined for the TDD reconfiguration information, the method further comprises:
when the TDD reconfiguration information change leads to a system information change, the network side does not change the value of the system information value tag in the SIB1 message.

Alternatively, the TDD reconfiguration information comprises one of the following contents: TDD uplink and downlink configuration identifier or uplink and downlink configurations of all the subframes in one radio frame.

Alternatively, the TDD reconfiguration information further comprises one of the following contents:
using a start radio frame number of the TDD uplink and downlink configuration indicated in the TDD reconfiguration information;
using a start radio frame number and an end radio frame number of the TDD uplink and downlink configuration indicated in the TDD reconfiguration information;
using the start radio frame number and a subframe number of the TDD uplink and downlink configuration indicated in the TDD reconfiguration information;
using the start radio frame number, the end radio frame number, a start subframe number, and an end subframe number of the TDD uplink and downlink configuration indicated in the TDD reconfiguration information;
a life cycle of the TDD uplink and downlink configuration indicated in the TDD reconfiguration information; and
a life cycle and an offset of the TDD uplink and downlink configuration indicated in the TDD reconfiguration information.

The embodiment of the present invention further provides an apparatus for notifying time division duplex (TDD) reconfiguration information which is located in the network side, comprising:
a determining module, which is configured to: determine that it needs to change the current TDD uplink and downlink configuration, and determine the TDD uplink and downlink configuration after the change;
a sending module, which is configured to: send the TDD reconfiguration information to a user equipment (UE) with the TDD reconfiguration function in the local cell, wherein, the TDD reconfiguration information indicates the TDD uplink and downlink configuration after the change.

Alternatively, the sending module is configured to carry the TDD reconfiguration information in one of the following messages and send it to the UE in the local cell:
System Information Block type 1 (SIB1) message,
SIB message defined for the TDD reconfiguration information,
Radio Resource Control (RRC) reconfiguration message, and
RRC message defined for the TDD reconfiguration information.

Through the technical scheme of the present invention, the network side can send the TDD reconfiguration information when it needs to change the TDD uplink and downlink configuration to indicate the UE in the local cell of the TDD uplink and downlink configuration after the change, so that the UE can timely obtain the TDD uplink and downlink configuration after the change and use the changed TDD uplink and downlink configuration, thus avoiding the problem of service delay and/or resource waste due to the mismatching between the TDD uplink and downlink configuration and the current uplink and downlink services.

### Brief Description of the Drawings

The accompanying figures described herein provide a further understanding of the technical scheme of the present invention and constitute a part of the present application, the exemplary embodiments of the present invention and their descriptions serve to explain the technical scheme of the present invention and do not constitute an improper limit of the technical scheme of the present invention. In the accompanying drawings:
FIG. 1 is a schematic diagram of a system information change in an existing TD-LTE system.
FIG 2 is a flow chart of a method for updating TDD uplink and downlink configuration in accordance with a first embodiment of the present invention.
FIG. 3 is a schematic diagram of the structure of an apparatus for updating TDD uplink and downlink configuration in accordance with a second embodiment of the present invention.
FIG. 4 is schematic diagram of the structure of an apparatus for updating TDD uplink and downlink configuration in accordance with the preferred embodiment of a second embodiment of the present invention.
FIG. 5 is a flow chart of a method for notifying TDD reconfiguration information in accordance with a third embodiment of the present invention.
FIG. 6 is a structural diagram of an apparatus for notifying TDD reconfiguration information in accordance with a fourth embodiment of the present invention.
FIG. 7 is a flow chart of updating the TDD uplink and downlink configuration in accordance with a fifth embodiment of the present invention.
FIG. 8 is a flow chart of updating the TDD uplink and downlink configuration in accordance with a sixth embodiment of the present invention.
FIG. 9 is a flow chart of updating the TDD uplink and downlink configuration in accordance with a seventh embodiment of the present invention.
FIG. 10 is a flow chart of updating the TDD uplink and downlink configuration in accordance with an eighth embodiment of the present invention.
FIG. 11 is a flow chart of updating the TDD uplink and downlink configuration in accordance with a ninth embodiment of the present invention.

### Preferred Embodiments of the Invention

Hereinafter the technical scheme of the present invention will be described in detail with reference to the accompanying drawings and in conjunction with the embodiments. It should be noted that, in the case of no conflict, the embodiments and features in the embodiments of the present application may be combined with each other.

### The first embodiment

FIG. 2 is a flow chart of a method for updating TDD uplink and downlink configuration in accordance with an embodiment of the present invention, as shown in FIG. 2, the method mainly comprises the following steps.

Step S202, the UE receives the TDD reconfiguration information sent by the network side (such as the eNB in the TD-LTE system).

In the embodiment of the present invention, the modes of the network side sending the TDD reconfiguration information include but are not limited to the following sending modes:
(1) using the system information block type 1 (SIB1) message to carry the TDD reconfiguration information;
(2) using the new SIB (System Information Block) message to carry the TDD reconfiguration information, that is, defining a new SIB message for the TDD reconfiguration information, wherein the SIB message is dedicated to carrying the TDD reconfiguration information;
(3) using a radio resource control (RRC) reconfiguration message to carry the TDD reconfiguration information;
(4) using a new RRC message to carry the TDD reconfiguration information, that is, defining a new RRC message for the TDD reconfiguration information, wherein the RRC message is dedicated to carrying the TDD reconfiguration information.

In one preferred embodiment in the embodiments of the present invention, when the TDD reconfiguration information uses the newly defined SIB message to carry, and when the TDD reconfiguration change leads to the system information (SI) change, the value of the (System Information Value Tag) SystemInfoValueTag in the SIB1 message does not change.

In another preferred embodiment in the embodiments of the present invention, when the TDD reconfiguration information uses a new SIB message to carry, if the paging message received by the UE comprises a new SIB message change indication, the UE immediately receives the new SIB message and reads the new TDD reconfiguration information according to the mapping relationship between the SI message and the new SIB message carrying the TDD reconfiguration information given in the SIB1 message.

In one preferred embodiment in the embodiments of the present invention, the TDD reconfiguration information comprises: TDD uplink and downlink configuration identifier, such as, the seven uplink and downlink configuration identifiers in Table 1; or the uplink and downlink configurations of all the subframes in one radio frame. In this way, the uplink and downlink configurations may not be limited to the seven uplink and downlink configurations in Table 1, and the network side can define new uplink and downlink configurations.

Alternatively, the TDD reconfiguration information further comprises one of the following contents:
(1) using the start radio frame number of the subframe configuration (that is, the TDD uplink and downlink configuration) indicated in the TDD reconfiguration information;
(2) using the start radio frame number and the end radio frame number of the subframe configuration indicated in the TDD reconfiguration information;
(3) using the start radio frame number and the subframe number of the subframe configuration indicated in the TDD reconfiguration information;
(4) using the start radio frame number, the end radio frame number, the start subframe number and the end subframe number of the subframe configuration indicated in the TDD reconfiguration information;
(5) the life cycle of the subframe configuration indicated in the TDD reconfiguration information; and
(6) the life cycle and the offset of the subframe configuration indicated in the TDD reconfiguration information.

Step S204, after receiving the TDD reconfiguration information, the UE immediately determines a time period of using the TDD uplink and downlink configuration indicated in the received TDD reconfiguration information, and uses the TDD uplink and downlink configuration indicated in the received TDD reconfiguration information within the time period; or, after receiving the TDD reconfiguration information, the UE immediately uses the TDD uplink and downlink configuration indicated in the received TDD reconfiguration information.

In one preferred embodiment in the embodiments of the present invention, the time period determined by the UE includes but is not limited to:
(1) next broadcast control channel (BCCH) change cycle;
(2) the time period indicated in the TDD reconfiguration information, for example, the time period from the start radio frame indicated in the TDD reconfiguration information to the end radio frame indicated in the TDD reconfiguration information;
(3) from the time point indicated in the TDD reconfiguration information to the time pointe indicated in the newly received TDD reconfiguration information, for example, start from the start radio frame using the TDD uplink and downlink configuration in the TDD reconfiguration message indicated in the TDD reconfiguration information, and end at the start radio frame using the TDD uplink and downlink configuration in the new TDD reconfiguration message indicated in the newly received TDD reconfiguration information;
(4) from the time point of receiving the TDD reconfiguration information to the time point of receiving the new TDD reconfiguration information, that is, after receiving the TDD reconfiguration information, the UE immediately uses the TDD uplink and downlink configuration indicated in the received TDD reconfiguration information;
(5) start from the next BCCH change cycle and end at the BCCH change cycle where the newly received TDD reconfiguration information is located.

In one preferred embodiment in the embodiments of the present invention, the UE can report the TDD reconfiguration function supported by the UE at the same time of reporting the UE capability to the network side.

In one preferred embodiment in the embodiments of the present invention, the network side sends ON/OFF information to the UE to control the UE to turn on or off the TDD reconfiguration function.

With the abovementioned method provided in the embodiments of the present invention, the UE can receive the TDD reconfiguration information sent by the network side, and use the uplink and downlink configuration indicated in the TDD reconfiguration information in the appropriate time period, thereby achieving the TDD dynamic configuration, improving the TDD uplink and downlink configuration change frequency, and avoiding the problem of service delay and/or resource waste due to the mismatching between the TDD uplink and downlink configuration and the current uplink and downlink services. Moreover, since the network side can indicate the uplink and downlink configurations of all the subframes in one radio frame in the TDD reconfiguration information, a flexible uplink and downlink configuration can be used and is not limited to the seven uplink and downlink configurations shown in Table 1.

### The second embodiment

The present embodiment provides an apparatus for updating TDD uplink and downlink configuration, and the apparatus is located in the user equipment and may be used to implement the method of the first embodiment.

FIG. 3 is a schematic diagram of the structure of an apparatus for updating TDD uplink and downlink configuration in accordance with an embodiment of the present invention, as shown in FIG. 3, the apparatus comprises: receiving module 310, which is configured to: receive the TDD reconfiguration information sent by the network side at any time; executing module 330, which is connected with the receiving module 310 and is configured to: immediately determine the time period of using the TDD uplink and downlink configuration indicated in the received TDD reconfiguration information after the receiving module 310 receives the TDD reconfiguration information, and use the TDD uplink and downlink configuration indicated in the received TDD reconfiguration information within the time period; or, immediately use the TDD uplink and downlink configuration indicated in the received TDD reconfiguration information after the receiving module 310 receives the TDD reconfiguration information.

In one preferred embodiment in the embodiments of the present invention, the executing module 330 determines to use the uplink and downlink configuration indicated in the received TDD reconfiguration information in one of the following time periods: the next broadcast control channel (BCCH) change cycle, the time period indicated in the TDD reconfiguration information, from the time point indicated in the TDD reconfiguration information to the time point indicated in the newly received TDD reconfiguration information, as well as from the starting time point of the next BCCH change cycle to the ending time point of the BCCH change cycle where the newly received TDD reconfiguration information is located.

In one preferred embodiment in the embodiments of the present invention, the receiving module 310 may be configured to receive the TDD reconfiguration information sent by the network side at any time and carried in one of the following messages: system information block type 1 (SIB1) message, SIB message defined for the TDD reconfiguration information, radio resource control (RRC) reconfiguration message and RRC message defined for the TDD reconfiguration information.

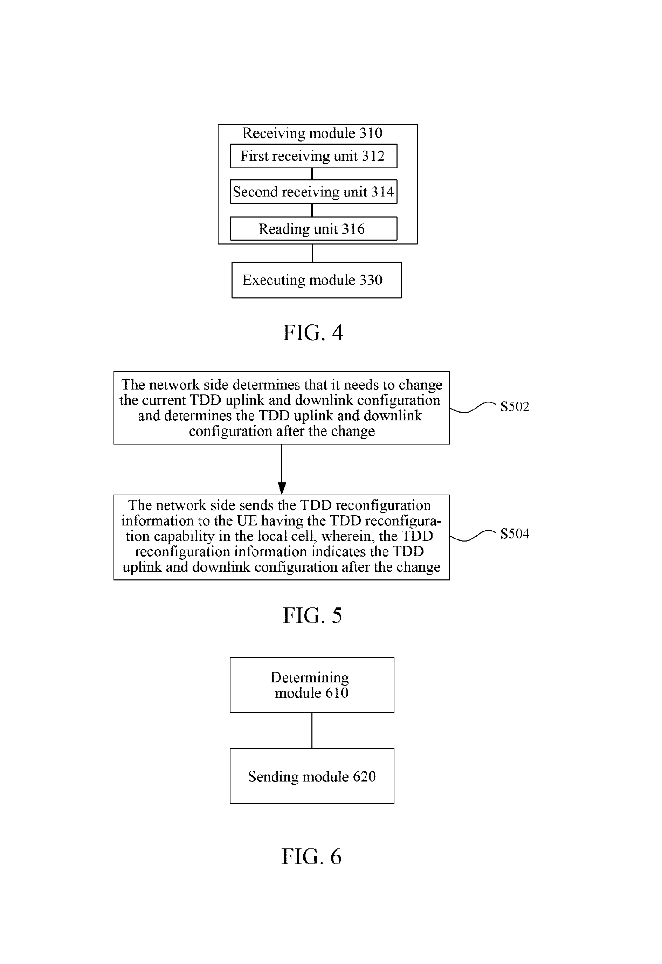

In one preferred embodiment in the embodiments of the present invention, when the TDD reconfiguration information is carried in the SIB message defined for the TDD reconfiguration information, as shown in FIG. 4, the receiving module 310 comprises: first receiving unit 312, which is configured to: receive a paging message, wherein the paging message comprises a indication of the change of the defined SIB message; second receiving unit 314, connected with the first receiving unit 312 and configured to: receive the SIB message carrying the TDD reconfiguration information in accordance with the mapping relationship between the system information (SI) message and the SIB message carrying the TDD reconfiguration information and indicated in the SIB1 message; and reading unit 316, connected with the second receiving unit 314 and configured to: read the TDD reconfiguration information in the SIB message carrying the TDD reconfiguration information.

In one preferred embodiment in the embodiments of the present invention, the information carried in the TDD reconfiguration information can be described as the first embodiment and is not particularly repeated here.

### The third embodiment

The embodiment of the present invention provides a method for notifying TDD reconfiguration information, and the method is applied to the network side and can be configured to use with the method provided in the first embodiment.

FIG. 5 is a flow chart of a method for notifying TDD reconfiguration information in accordance with an embodiment of the present invention, and as shown in FIG. 5, the method mainly comprises the following steps:
step S502, the network side determines that it needs to change the current TDD uplink and downlink configuration and determines the TDD uplink and downlink configuration after the change.

In a specific implementation process, the network side can judge whether it needs to change the current TDD uplink and downlink configuration or not according to the operator's long-term statistical data, the current to-be-transmitted uplink and downlink traffic data known by the network side, as well as other strategic factors, as well as determine the uplink and downlink configuration after the change.

Step S504, the network side sends the TDD reconfiguration information to the UE with the TDD reconfiguration function in the local cell, wherein, the TDD reconfiguration information indicates the TDD uplink and downlink configuration after the change.

Wherein the UE with the TDD reconfiguration function refers to the UE which is able to not only use the TDD uplink and downlink configuration of the local cell broadcasted by the network side via the SIB1 message, but also use the TDD uplink and downlink configuration indicated in the TDD reconfiguration information sent by the network side.

In the embodiment of the present invention, the network side sends the TDD reconfiguration information in two modes: broadcasting mode and dedicated signaling mode. wherein, the object sent in the dedicated signaling mode is a UE with the TDD reconfiguration function; if the broadcasting mode is used, only the UE with the TDD reconfiguration function will receive the TDD reconfiguration information therein.

In one preferred embodiment in the embodiments of the present invention, the network side may carry the TDD reconfiguration information in one of the following messages and send it to the UE in the local cell:
(1) system information block type 1 (SIB1) message;
(2) SIB message defined for the TDD reconfiguration information;
(3) Radio Resource Control (RRC) reconfiguration message;
(4) RRC message defined for the TDD reconfiguration information.

In one preferred embodiment in the embodiments of the present invention, when the TDD reconfiguration information is carried in the SIB message defined for the TDD reconfiguration information, the method further comprises: when the TDD reconfiguration information change leads to a system information change, the network side does not change the value of the system information value tag in the SIB1 message. Therefore, the number of times of changing the TDD uplink and downlink configuration is not limited within the 3 hours of period of validity of the system information.

In one preferred embodiment in the embodiments of the present invention, the TDD reconfiguration information comprises: TDD uplink and downlink configuration identifier, such as, the seven uplink and downlink configuration identifiers in the abovementioned Table 1; or the uplink and downlink configurations of all the subframes in one radio frame. In this mode, the uplink and downlink configuration may not be limited to the seven uplink and downlink configurations in Table 1, and the network side can define new uplink and downlink configurations.

Alternatively, the TDD reconfiguration information further comprises one of the following:
(1) using the start radio frame number of the subframe configuration (that is, the TDD uplink and downlink configuration) indicated in the TDD reconfiguration information;
(2) using the start radio frame number and the end radio frame number of the subframe configuration indicated in the TDD reconfigurable information;
(3) using the start radio frame number and the subframe number of the subframe configuration indicated in the TDD reconfiguration information;
(4) using the start radio frame number, the end radio frame number, the start subframe number and the end subframe number of the subframe configuration indicated in the TDD reconfiguration information;
(5) the life cycle of the subframe configuration indicated in the TDD reconfiguration information;
(6) the life cycle and the offset of the subframe configuration indicated in the TDD reconfiguration information.

In one preferred embodiment in the embodiments of the present invention, the network side can also receive the TDD reconfiguration function supported by the UE and reported by the UE at the same time of the UE reporting the UE capability to the network side.

In one preferred embodiment in the embodiments of the present invention, the network side can control the UE to turn on or off the TDD reconfiguration function by sending ON/OFF information to the UE.

With the abovementioned method provided in the embodiments of the present invention, the network side can send the TDD reconfiguration information when it needs to change the TDD uplink and downlink configuration, to indicate the UE in the local cell of the TDD uplink and downlink configuration after the change, so that the UE can timely obtain the TDD uplink and downlink configuration currently in use, thus avoiding the problem of service delay and/or resource waste due to the mismatching between the TDD uplink and downlink configuration and the current uplink and downlink services.

### The fourth embodiment

The embodiment of the present invention provides an apparatus for notifying TDD reconfiguration information, and the apparatus is located in the network side and can be used to implement the method described in the third embodiment.

FIG. 6 is a schematic diagram of the structure of the apparatus for notifying TDD reconfiguration information in accordance with an embodiment of the present invention, as shown in FIG. 6, the apparatus mainly comprises: determining module 610, which is configured to: determine that it needs to change the current TDD uplink and downlink configuration, and determine the TDD uplink and downlink configuration after the change; sending module 620, connected with the determining module 610 and configured to: send the TDD reconfiguration information to the user equipment (UE) with the TDD reconfiguration function in the local cell, wherein the TDD reconfiguration information indicates the TDD uplink and downlink configuration after the change.

In one preferred embodiment in the embodiments of the present invention, the sending module 620 is configured to carry the TDD reconfiguration information in one of the following messages and send it to the UE in the local cell: system information block type 1 (SIB1) message, SIB message defined for the TDD reconfiguration information, radio resource control (RRC) reconfiguration message and RRC message defined for the TDD reconfiguration information.

In the present embodiment, the TDD reconfiguration information sent by the sending module 620 may comprise the information described in the third embodiment and is not specifically repeated here.

The following embodiment will take the TD-LTE system as an example to describe.

### The fifth embodiment

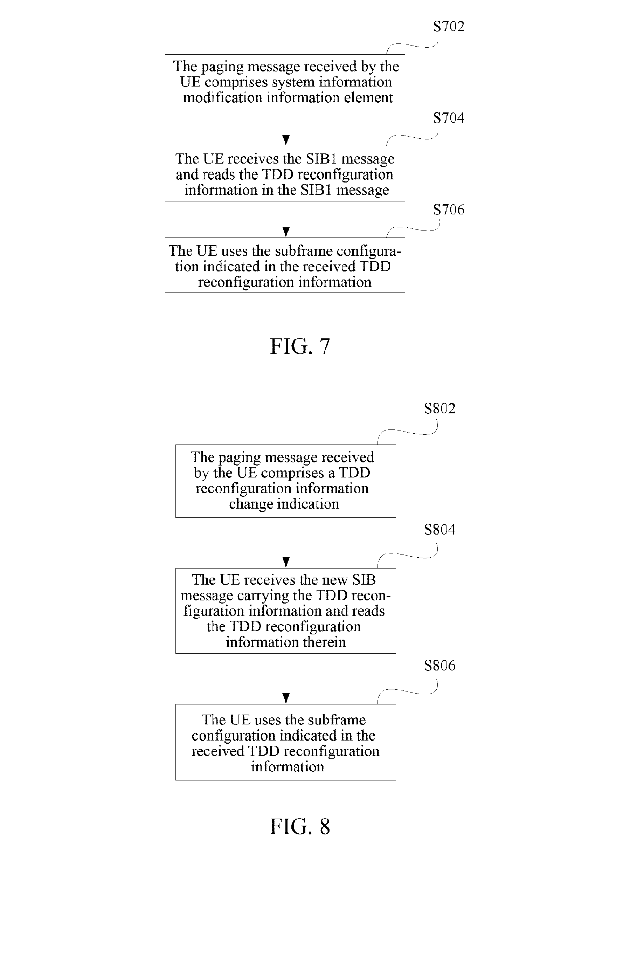

FIG. 7 is a flow chart of updating the TDD uplink and downlink configuration in the present embodiment, as shown in FIG. 7, in the present embodiment, the UE updating the TDD uplink and downlink configuration mainly comprises the following steps.

Step S702, the paging message received by the UE comprises system information modification information element.

When a UE in the RRC idle state (RRC_IDLE) or in the RRC connected state (RRC_CONNECTED) receives a paging message, if the received Paging message comprises the SystemInfoModification information element (IE), it indicates that the system information will change in the next BCCH change cycle (referred to as change cycle hereinafter). Therefore, the UE needs to restart receiving the system information at the boundary of the change period cycle immediately following the received paging message, the UE in the RRC_IDLE state needs to receive the Master Information Block (MIB) and SIB1-SIB8, the UE in the RRC_CONNECTED state needs to receive the MIB, SIB1, SIB2 and SIB8.

Step S704, the UE receives the SIB1 message and reads the TDD reconfiguration information in the SIB1 message.

When the UE accesses the network, or when the system information stored by the UE exceeds a predetermined period of validity (such as 3 hours), even if there is no step S702, the UE will still read the system message. When the UE needs to receive the TDD reconfiguration information, for example, when the UE accesses the network, and/or the UE enters into the RRC_CONNECTED state, and/or after the UE receives an indication of turning on the TDD reconfiguration function sent by the network side, and/or when the UE accesses the network, and/or after the UE receives a Paging message containing the system information change indication, and/or after the stored system information is invalid, the UE can read the TDD reconfiguration information. In addition, the UE can receive the SIB1 message in each change period cycle or at the time point of sending each SIB1, and read the TDD reconfiguration information in the SIB1 message. When a UE in the RRC_IDLE state and/or in the RRC_CONNECTED state receives the SIB1 message, if the SIB1 message comprises the TDD reconfiguration information, the UE reads the TDD reconfiguration information. The TDD reconfiguration information comprises: TDD uplink and downlink configuration identifier and uplink and downlink configurations of all the subframes in one radio frame.

The TDD uplink and downlink configuration identifier is one in 0-6 given in the left column of Table 1.

The uplink and downlink configurations of all the subframes in one radio frame use the showing way to notify the UE of what types the ten subframes in one radio frame are. For example, use a bitmap with a length of 20 bits, two bits are used to denote one subframe, 01 denotes uplink subframe, 10 denotes downlink subframe, and 11 denotes special subframe; or use a character string with a length of 10, different characters are respectively used to denote uplink subframe, downlink subframe and special subframe. In this mode, the uplink to downlink subframe ratio can be flexibly configured in order to adapt to actual needs.

In one preferred embodiment of the present embodiment, the TDD reconfiguration information may also comprise one of the following contents: using the start radio frame number of the subframe configuration indicated in the TDD reconfiguration information; using the start radio frame number and the end radio frame number of the subframe configuration indicated in the TDD reconfiguration information; using the start radio frame number and the subframe number of the subframe configuration indicated in the TDD reconfiguration information; using the start radio frame number, the end radio frame number, the start subframe number and the end subframe number of the subframe configuration indicated in the TDD reconfiguration information; the life cycle of the subframe configuration indicated in the TDD reconfiguration information; and the life cycle and the offset of the subframe configuration indicated in the TDD reconfiguration information.

Step S706, the UE uses the subframe configuration indicated in the received TDD reconfiguration information.

After successfully receiving the TDD reconfiguration information, the UE needs to determine the time period of using the subframe configuration indicated in the TDD reconfiguration information, wherein the time period may be any one of the following time periods:
first, the UE uses the subframe configuration of the TDD reconfiguration information in the next change cycle immediately following the change cycle in which the TDD reconfiguration information is received. When the cycle of the TDD reconfiguration information and the change cycle are the same, the UE only needs to read the TDD reconfiguration information in the SIB1 in each change cycle, and determine the indicated subframe configuration, and use the subframe configuration within the next change cycle, meanwhile, read the new TDD reconfiguration information in the new SIB1 message in the next change cycle.

According to the procedure in the existing protocol, when the SIB1 message changes, the network side needs to use the Paging message to notify the UE, therefore, alternatively, the network side can also use the Paging message to notify the UE of the system information change in every change cycle, thereby conforming to the definition in the existing LTE protocol, but the drawback is that the signaling overhead will be relatively large, and the power consumption of the UE will also be relatively large.

Second, the UE uses the subframe configuration of the TDD reconfiguration information in the time period indicated in the TDD reconfiguration information. The TDD reconfiguration information may comprise: using the start radio frame number and the end radio frame number of the subframe configuration indicated in the TDD reconfiguration information, wherein, the UE starts using the subframe configuration indicated in the TDD reconfiguration information from the #0 subframe in the radio frame represented by the Start radio Frame Number (SFN) to the end of the radio frame indicated by the end radio frame number; or using the start radio frame number N1, the start subframe number M1, the end radio frame number N2, and the end subframe number M2 of the subframe configuration indicated in the TDD reconfiguration information, wherein, the UE starts using the subframe configuration indicated in the TDD subframe reconfiguration information from the #M1 subframe in the radio frame N1 to the end of the #M2 subframe in the radio frame N2; or the life cycle T of the subframe configuration indicated in the TDD reconfiguration information, wherein, T is the TDD reconfiguration cycle, the UE starts using the subframe configuration indicated in the TDD reconfiguration information from the radio frame of SFN mod T=0 to the end of the radio frame of SFN mod T=T-1, wherein mod is the modulo operator; or the life cycle T and the offset of the subframe configuration indicated in the TDD reconfiguration information, wherein, the UE starts using the subframe configuration indicated in the TDD reconfiguration information from the subframe in a radio frame of (SFN*10+subframe number) mod T=offset to the end of the subframe in the radio frame of (SFN*10+subframe number) mod T=offset-1, or the UE starts using the subframe configuration indicated in the TDD reconfiguration information from the radio frame of SFN mod T=offset to the end of the radio frame of SFN mod T=offset-1, wherein the subframe number is subframe number.

Third, start from the time point indicated in the TDD reconfiguration information to the time point indicated in the newly received TDD reconfiguration information. The TDD reconfiguration information may comprise: using the start radio frame number N of the subframe configuration indicated in the TDD reconfiguration information, wherein, the UE starts using the subframe configuration indicated in the TDD reconfiguration information from the #0 subframe in the radio frame of SFN=N to the time point given in the new TDD reconfiguration information received by the UE; or using the start radio frame number N and the subframe number M of the subframe configuration indicated in the TDD reconfiguration information, wherein, the UE starts using the subframe configuration indicated in the TDD reconfiguration information from the #M subframe in the radio frame of SFN=N to the time point given in the new TDD reconfiguration information received by the UE; or the life cycle T of the subframe configuration indicated in the TDD reconfiguration information, wherein, the UE starts using the subframe configuration indicated in the TDD reconfiguration information from the radio frame of SFN mod T=0 to the time point given in the new TDD reconfiguration information received by the UE; or the life cycle T and the offset of the subframe configuration indicated in the TDD reconfigurable information, wherein, the UE starts using the subframe configuration indicated in the TDD reconfiguration information from the subframe in the radio frame of (SFN*10+subframe number) mod T=offset to the time point given in the new TDD reconfiguration information received by the UE, or the UE starts using the subframe configuration indicated in the TDD reconfiguration information from the radio frame of SFN mod T=offset to the time point given in the new TDD reconfiguration information received by the UE.

Fourth, the UE uses the subframe configuration of the reconfiguration information from the time point of receiving the TDD reconfiguration information to the time point of receiving the new TDD reconfiguration information. After correctly decoding the TDD reconfiguration information and determining the subframe configuration indicated thereby, the UE immediately uses the subframe configuration until the UE correctly decodes the new TDD reconfiguration information and determines the new subframe configuration.

Fifth, start from the next BCCH change cycle to the end of the BCCH change cycle where the newly received TDD reconfiguration information is located. Start using the subframe configuration indicated in the TDD reconfiguration information from the next change cycle immediately following the change cycle where the TDD reconfiguration information received by the UE is located to the end of the change cycle where the new TDD reconfiguration information received by the UE is located.

### The sixth embodiment

FIG. 8 is a flow chart of updating the TDD uplink and downlink configuration in the present embodiment, and as shown in FIG. 8, in the present embodiment, the UE updating the TDD uplink and downlink configuration comprises the following steps.

Step S802, the UE receives a paging message, and the paging message comprises a TDD reconfiguration information change indication.

If the paging message received by the UE comprises the TDD reconfiguration information change indication, the UE needs to immediately start receiving the new SIB message carrying the TDD reconfiguration information according to the mapping relationship between the system information (SI) message and the new SIB message carrying the TDD reconfiguration information and indicated in the SIB1 message.

Step S804, the UE receives the new SIB message carrying the TDD reconfiguration information and reads the TDD reconfiguration information therein.

When the UE needs to receive the TDD reconfiguration information, for example, when the UE accesses into the network, and/or when the UE enters into the RRC_CONNECTED state, and/or after the UE receives the indication of turning on the TDD reconfiguration function sent by the network side, and/or when the UE accesses into the network, and/or after the UE receives the Paging message containing the TDD reconfiguration information change indication, and/or after the stored system information is invalid, the UE can read the TDD reconfiguration information. In addition, the UE in the RRC_IDLE state and/or in the RRC_CONNECTED state can also receive the new SIB message carrying the TDD reconfiguration information in each change cycle or each possible time point of sending the new SIB message carrying the TDD reconfiguration information. The TDD reconfiguration information comprises: TDD uplink and downlink configuration identifier or uplink and downlink configurations of all the subframes in one radio frame.

The TDD uplink and downlink configuration identifier is one in the 0-6 given in the left column in Table 1. The uplink and downlink configurations of all the subframes in one radio frame use the showing way to notify the UE of what types the ten subframes in one radio frame are. For example, use a bitmap with a length of 20 bits, wherein two bits are used to denote one subframe, 01 denotes uplink subframe, 10 denotes downlink subframe, and 11 denotes special subframe; or use a character string with a length of 10, and different characters are respectively used to denote uplink subframe, downlink subframe and special subframe.

The TDD reconfiguration information may also comprise one of the following contents: using the start radio frame number of the subframe configuration indicated in the TDD reconfiguration information; using the start radio frame number and the end radio frame number of the subframe configuration indicated in the TDD reconfiguration information; using the start radio frame number and the subframe number of the subframe configuration indicated in the TDD reconfiguration information; using the start radio frame number, the start subframe number, the end radio frame number and the end subframe number of the subframe configuration indicated in the TDD reconfiguration information; the life cycle of the subframe configuration indicated in the TDD reconfiguration information; and the life cycle and the offset of the subframe configuration indicated in the TDD reconfiguration information.

Step S806, the UE uses the subframe configuration indicated in the received TDD reconfiguration information.

This step is the same as the step S706 in the fifth embodiment and is not repeated here.

The seventh embodiment

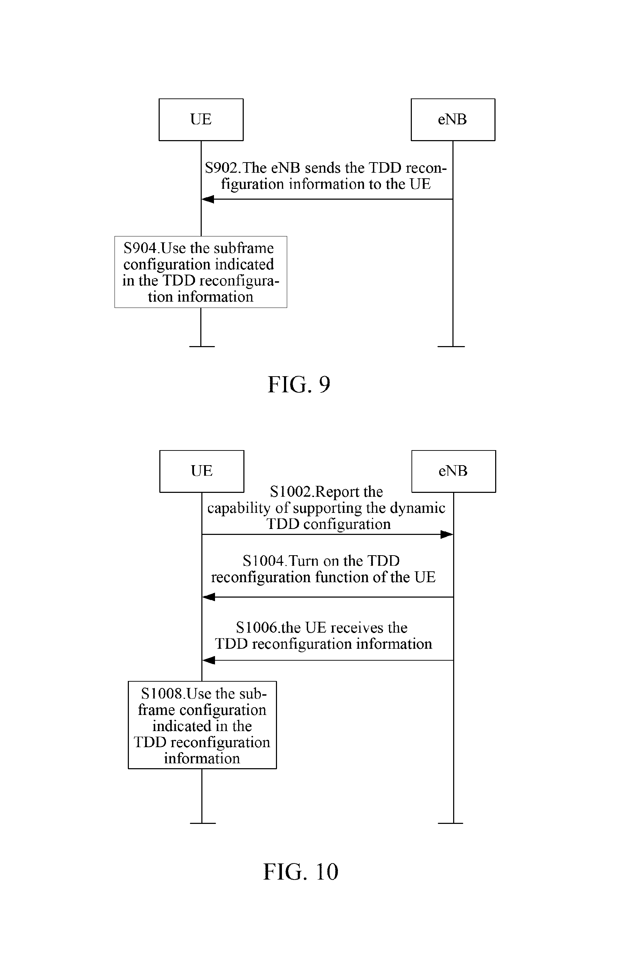

FIG. 9 is a flow chart of updating the TDD uplink and downlink configuration in the present embodiment, and as shown in FIG. 9, in the present embodiment, the UE updating the TDD uplink and downlink configuration mainly comprises the following steps.

Step S902, the eNB sends the TDD reconfiguration information to the UE.

The TDD reconfiguration information can be carried in a RRC dedicated signaling. For example, the RRC Connection Reconfiguration message is used to carry the TDD reconfiguration information, or a new RRC signaling may be added in the existing protocol to send the TDD reconfiguration information. The eNB sends the UE a RRC connection reconfiguration message or a new RRC signaling to notify the UE of the TDD reconfiguration information.

Step S904, the UE uses the subframe configuration indicated in the TDD reconfiguration information.

This step is the same as the step S706 in the fifth embodiment and is not repeated here.

The eighth embodiment

FIG 10 is a flow chart of updating the TDD uplink and downlink configuration in the present embodiment, and as shown in FIG. 10, in this embodiment, the UE updating the TDD uplink and downlink configuration mainly comprises the following steps.

Step S1002, the UE reports its capability of supporting the dynamic TDD configuration.

When the UE accesses the network, it notifies the network that it has the capability of supporting the TDD configuration via the Non Access Stratum (NAS) message, and/or when receiving a signaling of requesting the UE capability sent by the network side, reports its own capability of supporting the TDD reconfiguration to the network side.

Step S1004, the network side sends a TDD reconfiguration function ON information to the UE to turn on the TDD reconfiguration function of the UE.

The network side decides to turn on the UE's TDD reconfiguration function according to its own capability, and sends the TDD reconfiguration function ON information to the UE to turn on the UE's TDD reconfiguration function.

Since some networks themselves may not support the TDD reconfiguration function, the UE may continuously monitor the channel in order to receive the TDD reconfiguration information, which for the UE, the power consumption may be relatively large, therefore it requires the network side to control the UE whether to turn on the TDD reconfiguration function or not, if the network side does not send an ON indication to the UE, the UE does not need to receive the TDD reconfiguration information. The network can also choose to turn off the TDD reconfiguration function of the UE subsequently according to its own capacity and other factors, and only needs to send an OFF indication to the UE. The ON/OFF indication can be carried via the system information or the RRC dedicated signaling.

Step S1006, the UE receives the TDD reconfiguration information.

This step can be implemented in accordance with the description in the abovementioned fifth, sixth and seventh embodiments and is not repeated here.

Step S1008, the UE uses the subframe configuration indicated in the TDD reconfiguration information.

This step is the same as the step S706 in the fifth embodiment and is not repeated here.

The ninth embodiment

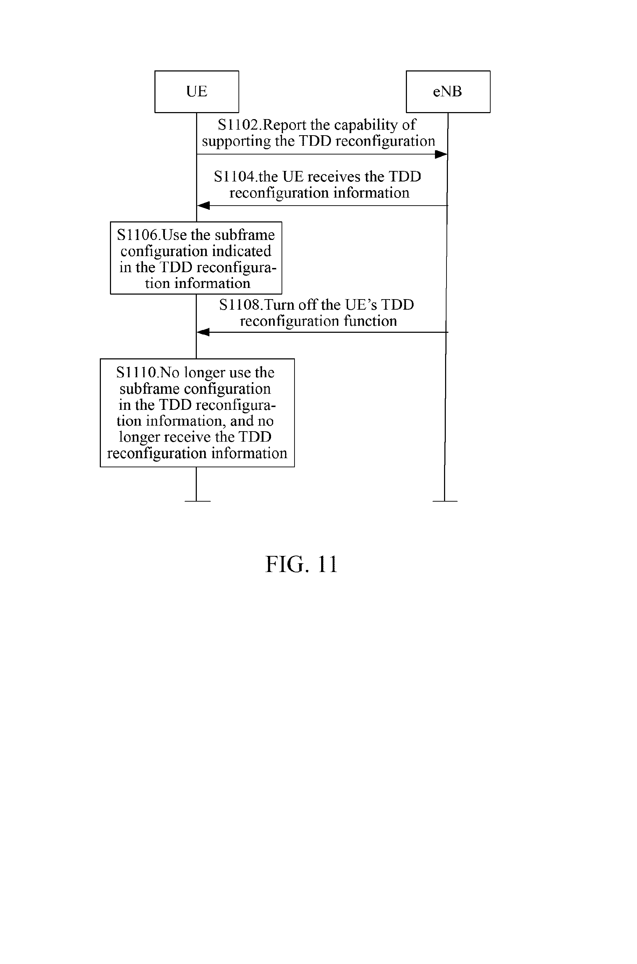

FIG. 11 is a flow chart of updating the TDD uplink and downlink configuration in the present embodiment, and as shown in FIG. 11, in the present embodiment, the UE updating the TDD uplink and downlink configuration mainly comprises the following steps.

Step S 1102, the UE reports its capability of supporting the TDD reconfiguration.

This step is the same as the step S1002 in the eighth embodiment and is not repeated here.

Step S1104, the UE receives the TDD reconfiguration information.

This step is the same as the step S1006 in the eighth embodiment and is not repeated here.

Step S1106, the UE uses the subframe configuration indicated in the TDD reconfiguration information.

This step is the same as the step S706 in the fifth embodiment and is not repeated here.

Step S1108, the network side sends the TDD reconfiguration function OFF information to the UE to turn off the UE's TDD reconfiguration function.

The network side decides to turn off the UE's TDD reconfiguration function according to its own capability, and sends the TDD reconfiguration function OFF information to the UE to turn off the UE's TDD reconfiguration function.

In the embodiment of the present invention, one advantage of using the TDD reconfiguration is to increase the network throughput, if the UE continuously receives the TDD reconfiguration information, it can ensure that the UE immediately uses the most suitable subframe configuration at the time point of entering into the RRC_CONNECTED state and communicating with the network side, which has the benefit of increasing the network throughput. Therefore, the UE attempts to receive the TDD reconfiguration information after accessing the network, and the UE keeps trying to receive the TDD reconfiguration information until receiving the OFF indication sent by the network side. Subsequently if the network side needs to turn on the UE's TDD reconfiguration function according to its own capability, it only needs to send an ON indication to the UE.

Step S1110, the UE no longer uses the subframe configuration in the TDD reconfiguration information, and no longer receives the TDD reconfiguration information.

After the UE receives the OFF indication sent by the network side, it no longer uses the subframe configuration in the received TDD reconfiguration information, but uses the TDD uplink and downlink configuration indicated in the SIB1 message, that is, the UE uses the same TDD configuration as the traditional UE which does not have the TDD reconfiguration function. The UE does not receive the TDD reconfiguration information any longer. The ON/OFF indication can be carried via the system information or the RRC dedicated signaling.

From the above description, it can be seen that via one or more of the abovementioned embodiments the UE may receive the TDD reconfiguration information sent by the network side at any time, and use the uplink and downlink configuration indicated in the TDD reconfiguration information in a suitable time period, so as to achieve the TDD dynamic configuration, increase the TDD uplink and downlink configuration change frequency, and further avoid the problem of service delay and/or resource waste due to the mismatching between the TDD uplink and downlink configuration and the current uplink and downlink services. Furthermore, since the network side can indicate the uplink and downlink configurations of all the subframes in one radio frame in the TDD reconfiguration information, a flexible uplink and downlink configuration can be used and is not limited to the seven uplink and downlink configurations shown in Table 1.

Obviously, a person skilled in the art should understand that, the respective modules or steps in the present invention may be implemented with universal computing devices, they can be concentrated on a single computing device or distributed in a network composed of a plurality of computing devices, alternatively, they may be implemented with program codes executable by the computing devices, therefore, they can be stored in storage means and executed by the computing devices, and in some cases, the steps illustrated or described herein may be performed in a different order, or they can be made into individual integrated circuit modules respectively, or a plurality of modules or steps therein can be made into a single integrated circuit module. Therefore, the embodiments of the present invention are not limited to any specific combination of hardware and software.

The above description is only preferred embodiments of the present invention and is not used to limit the technical scheme of the present invention, and for a person skilled in the art, the embodiments of the present invention may have various modifications and changes. Any modification, equivalent replacement and improvement made within the spirit and principle of the present invention should be included within the protection scope of the present invention.

### Industrial Applicability

Through the technical scheme of the present invention, the network side can send the TDD reconfiguration information when it needs to change the TDD uplink and downlink configuration to indicate the UE in the local cell of the TDD uplink and downlink configuration after the change, so that the UE can timely obtain the TDD uplink and downlink configuration after the change and use the changed TDD uplink and downlink configuration, thus avoiding the problem of service delay and/or resource waste due to the mismatching between the TDD uplink and downlink configuration and the current uplink and downlink services.

## Claims

1. A method for updating time division duplex (TDD) uplink and downlink configuration, comprising:
after receiving TDD reconfiguration information sent by a network side, a user equipment (UE) immediately determining a time period of using a TDD uplink and downlink configuration indicated in the received TDD reconfiguration information, and using the TDD uplink and downlink configuration indicated by the received TDD reconfiguration information in the time period; or,
after receiving the TDD reconfiguration information sent by the network side, the UE immediately using the TDD uplink and downlink configuration indicated in the received TDD reconfiguration information.

2. The method of claim 1, wherein, the step of the UE immediately determining a time period of using the TDD uplink and downlink configuration indicated in the received TDD reconfiguration information comprises: the UE determining to use the TDD uplink and downlink configuration indicated in the received TDD reconfiguration information in one of the following time periods:
in a next broadcast control channel (BCCH) change cycle,
in a time period indicated in the TDD reconfiguration information,
from a time point indicated in the TDD reconfiguration information to a time point indicated in a newly received TDD reconfiguration information, and
from a starting time point of the next BCCH change cycle to an ending time point of the BCCH change cycle where the newly received TDD reconfiguration information is located.

3. The method of claim 1, wherein, the step of the UE receiving the TDD reconfiguration information sent by the network side comprises: the UE receiving the TDD reconfiguration information carried in one of the following messages and sent by the network side:
a system information block type 1 (SIB1) message,
a SIB message defined for the TDD Reconfiguration information,
a radio resource control (RRC) reconfiguration message, and
a RRC message defined for the TDD reconfiguration information.

4. The method of claim 3, wherein, when the TDD reconfiguration information is carried in the SIB message defined for the TDD reconfiguration information, the method further comprises:
when the TDD reconfiguration information change leads to a system information (SI) change, the network side not changing a value of a system information value tag in the SIB1 message.

5. The method of claim 3, wherein, when the TDD reconfiguration information is carried in the SIB message defined for the TDD reconfiguration information, the step of the UE receiving the TDD reconfiguration information sent by the network side comprises:
the UE receiving a paging message, wherein, the paging message comprises an indication of a change in the defined SIB message;
the UE immediately receiving the SIB message carrying the TDD reconfiguration information and sent by the network side according to a mapping relationship between a SI message and the SIB1 message which carries the TDD reconfiguration information and is indicated in the SIB message; and
the UE reading the TDD reconfiguration information in the SIB message carrying the TDD reconfiguration information.

6. The method of any one of claims 1 to 5, wherein, the TDD reconfiguration information comprises one of the following contents: TDD uplink and downlink configuration identifier or uplink and downlink configurations of all subframes in one radio frame.

7. The method of claim 6, wherein, the TDD reconfiguration information further comprises one of the following contents:
using a start radio frame number of the TDD uplink and downlink configuration indicated in the TDD reconfiguration information;
using the start radio frame number and an end radio frame number of the TDD uplink and downlink configuration indicated in the TDD reconfiguration information;
using the start radio frame number and a subframe number of the TDD uplink and downlink configuration indicated in the TDD reconfiguration information;
using the start radio frame number, the end radio frame number, a start subframe number, and an end subframe number of the TDD uplink and downlink configuration indicated in the TDD reconfiguration information;
a life cycle of the TDD uplink and downlink configuration indicated in the TDD reconfiguration information; and
a life cycle and an offset of the TDD uplink and downlink configuration indicated in the TDD reconfiguration information.

8. The method of any one of claims 1 to 5, wherein, before the step of the UE receiving the TDD reconfiguration information sent by the network side, the method further comprises:
the UE reporting a TDD reconfiguration function supported by the UE at the same time of reporting the UE capability to the network side.

9. The method of claim 8, wherein, before the step of the UE receiving the TDD reconfiguration information sent by the network side, the method further comprises:
the network side sending an ON information to the UE to control the UE to turn on the TDD reconfiguration function.

10. The method of claim 9, wherein, after the step of the UE receiving the TDD reconfiguration information sent by the network side, the method further comprises:
the network side sending an OFF information to the UE to control the UE to turn off the TDD reconfiguration function.

11. An apparatus for updating time division duplex (TDD) uplink and downlink configuration which is located in a user equipment, the apparatus comprising:
a receiving module, which is configured to receive TDD reconfiguration information sent by a network side;
an executing module, which is configured to: after the receiving module receives the TDD reconfiguration information, immediately determine a time period of using the TDD uplink and downlink configuration indicated in the received TDD reconfiguration information, and use the TDD uplink and downlink configuration indicated in the received TDD reconfiguration information in the time period; or, after the receiving module receives the TDD reconfiguration information, immediately use the TDD uplink and downlink configuration indicated in the received TDD reconfiguration information.

12. The apparatus of claim 11, wherein, the executing module determines to use the TDD uplink and downlink configuration indicated in the received TDD reconfiguration information in one of the following time periods:
in a next broadcast control channel (BCCH) change cycle,
in a time period indicated in the TDD reconfiguration information,
from a time point indicated in the TDD reconfiguration information to a time point indicated in the newly received TDD reconfiguration information, and
from a starting time point of the next BCCH change cycle to an ending time point of the BCCH change cycle where the newly received TDD reconfiguration information is located.

13. The apparatus of claim 11, wherein, the receiving module is configured to receive the TDD reconfiguration information carried in one of the following messages and sent by the network side:
a system information block type 1 (SIB1) message,
a SIB message defined for the TDD Reconfiguration information,
a radio resource control (RRC) reconfiguration message, and
a RRC message defined for the TDD reconfiguration information.

14. The apparatus of claim 13, wherein, when the TDD reconfiguration information is carried in the SIB message defined for the TDD reconfiguration information, the receiving module comprises:
a first receiving unit, which is configured to: receive a paging message, wherein the paging message comprises an indication of a change of the defined SIB message;
a second receiving unit, which is configured to: receive a SIB message carrying the TDD reconfiguration information according to a mapping relationship between a system information (SI) message and the SIB message carrying the TDD reconfiguration information indicated in the SIB1 message; as well as
a reading unit, which is configured to: read the TDD reconfiguration information in the SIB message carrying the TDD reconfiguration information.

15. A method for notifying time division duplex (TDD) reconfiguration information, comprising:
a network side determining that current TDD uplink and downlink configuration needs to be changed;
the network side determining TDD uplink and downlink configuration after a change; and
the network side sending the TDD reconfiguration information to a user equipment (UE) with the TDD reconfiguration function in the local cell, wherein the TDD reconfiguration information indicates the TDD uplink and downlink configuration after the change.

16. The method of claim 15, wherein, the step of the network side sending the TDD reconfiguration information to the UE with the TDD reconfiguration function in the local cell comprises: the network side carrying the TDD reconfiguration information in one of the following messages and sending to the UE in the local cell:
a system information block type 1 (SIB1) message,
a SIB message defined for the TDD Reconfiguration information,
a radio resource control (RRC) reconfiguration message,
a RRC message defined for the TDD reconfiguration information.

17. The method of claim 16, wherein, when the TDD reconfiguration information is carried in the SIB message defined for the TDD reconfiguration information, the method further comprises:
when the TDD reconfiguration information change leads to a system information change, the network side not changing the value of the system information value tag in the SIB1 message.

18. The method of any one of claims 15 to 17, wherein, the TDD reconfiguration information comprises one of the following contents: TDD uplink and downlink configuration identifier or uplink and downlink configurations of all the subframes in one radio frame.

19. The method of claim 18, wherein, the TDD reconfiguration information further comprises one of the following contents:
using a start radio frame number of the TDD uplink and downlink configuration indicated in the TDD reconfiguration information;
using a start radio frame number and an end radio frame number of the TDD uplink and downlink configuration indicated in the TDD reconfiguration information;
using the start radio frame number and a subframe number of the TDD uplink and downlink configuration indicated in the TDD reconfiguration information;
using the start radio frame number, the end radio frame number, a start subframe number, and an end subframe number of the TDD uplink and downlink configuration indicated in the TDD reconfiguration information;
a life cycle of the TDD uplink and downlink configuration indicated in the TDD reconfiguration information; and
a life cycle and an offset of the TDD uplink and downlink configuration indicated in the TDD reconfiguration information.

20. An apparatus for notifying time division duplex (TDD) reconfiguration information which is located in the network side, comprising:
a determining module, which is configured to: determine that current TDD uplink and downlink configuration needs to be changed, and determine a TDD uplink and downlink configuration after a change;
a sending module, which is configured to: send the TDD reconfiguration information to a user equipment (UE) with the TDD reconfiguration function in the local cell, wherein, the TDD reconfiguration information indicates the TDD uplink and downlink configuration after the change.

21. The apparatus of claim 20, wherein, the sending module is configured to carry the TDD reconfiguration information in one of the following messages and send to the UE in the local cell:
a system information block type 1 (SIB1) message,
a SIB message defined for the TDD reconfiguration information,
a radio sesource control (RRC) reconfiguration message, and
a RRC message defined for the TDD reconfiguration information.
